# EUROPEAN PATENT SPECIFICATION

(11) **EP 1 069 376 B1**
(45) Date of publication and mention of the grant of the patent: **09.02.2005**
(21) Application number: 00115216.4
(22) Date of filing: 13.07.2000
(51) Int. Cl.: F23J 7/00

(54) **Method for reducing NOx emissions in liquid fuel combustion processes**
Verfahren zur Verminderung von NOx Emissionen in Verbrennungsverfahren von Flüssigbrennstoffen
Procédé pour la réduction des émissions de NOx pour les procédés de combustion de fuel liquide

(30) Priority: 15.07.1999 IT MI991575
(43) Date of publication of application: 17.01.2001
(73) Proprietor: Carbofuel S.p.A., 21055 Gorla Minore (Varese) (IT); SIRAM S.P.A., 20152 Milano (MI) (IT)
(72) Inventor: Carpaneto, Giacomo, 21055 Gorla Minore (Varese) (IT); De Boni, Aldo, 20016 Pero (Milano) (IT)
(74) Representative: Cicogna, Franco

(56) References cited:
- EP-A- 0 844 014
- DE-A- 4 306 765
- DE-A- 4 429 054
- DE-A- 19 713 136
- DE-A- 19 728 344
- DE-A- 19 731 546
- DE-U- 29 515 904

## Description

### BACKGROUND OF THE INVENTION

The present invention relates to a method for reducing environmental emissions in liquid-fuel combustion processes, and also relates to an apparatus for carrying out said method.

Such an apparatus and method are disclosed in DE 19728344 and DE 4429054.

A very important problem of all the combustion processes using liquid fuels, such as diesel fuels, fluid oils or dense oils, is that relates to the environmental emissions of Nox, Sox, Co, and powders, since the combustion processes tend to emit to the encompassing atmosphere or environment an amount of combustion products exceeding the levels imposed by enforcing rules.

Prior solutions for reducing the above mentioned emissions cause other dangerous components to be dispersed into the atmosphere, such as high amounts of dangerous reagents.

### SUMMARY OF THE INVENTION

Accordingly, the aim of the present invention is to overcome the above mentioned problem, by providing a method for reducing environmental emissions in liquid-fuel combustion processes, allowing to greatly reduce the amount of nitrogen oxides and carbon monoxides, by transforming them into environmentally inert components, such as nitrogen, carbon dioxide and water steam.

Within the scope of the above mentioned aim, a main object of the present invention is to provide such a method which does not form any liquid effluents, and which does not discharge into the atmosphere substances different from those which are normally present therein, and which does not require the use of dangerous reagents or high amounts thereof.

Yet another object of the invention is to provide such a method which, owing to its specifically designed features, is very reliable and safe in operation.

Yet another object of the present invention is to provide such a method which can be performed by using easily available apparatus and which, moreover, is very advantageous from a mere economic standpoint.

According to one aspect of the present invention, the above mentioned aim and objects, as well as yet other objects, which will become more apparent hereinafter, are achieved by a method for reducing environmental emissions in liquid-fuel combustion processes, characterized in that said method comprises a step of injecting an aqueous urea solution carried by a carrier fluid into a heat generator, at a region of said heat generator where the combustion products have a temperature from 800°C to 1000°C.

### BRIEF DESCRIPTION OF THE DRAWINGS

Further characteristics and advantages of the present invention will become more apparent hereinafter from the following detailed disclosure of a preferred embodiment of a method for reducing environmental emissions in liquid-fuel combustion processes, as well as of a related apparatus, being shown, by way of an indicative, but not limitative example, in the figures of the accompanying drawings, where:

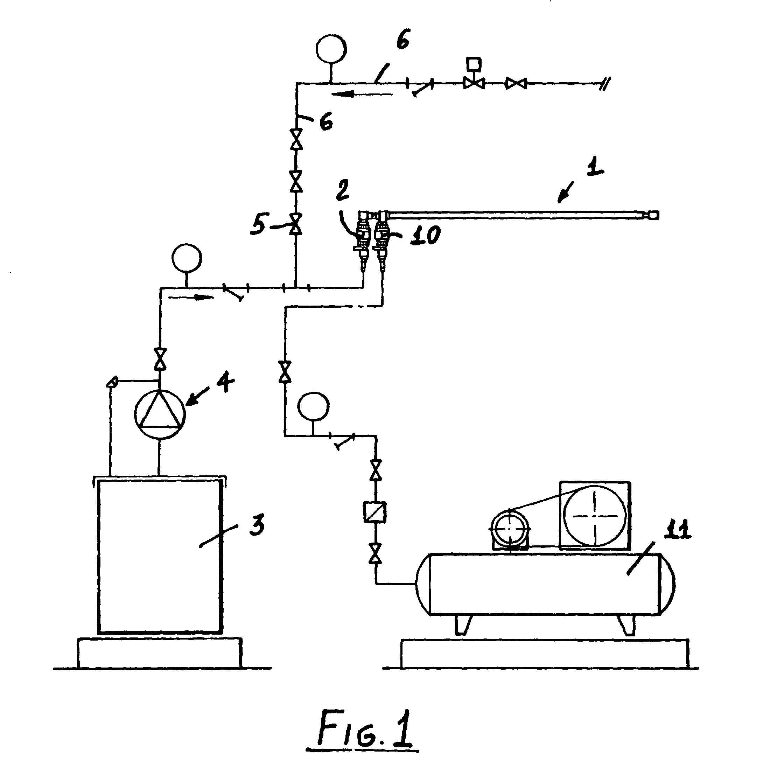

Figure 1 is a schematic view illustrating an apparatus according to the present invention;
Figure 2 illustrates the combustion chamber or combustor to which a lance injector has been applied, and being specifically designed for carrying out the inventive method;

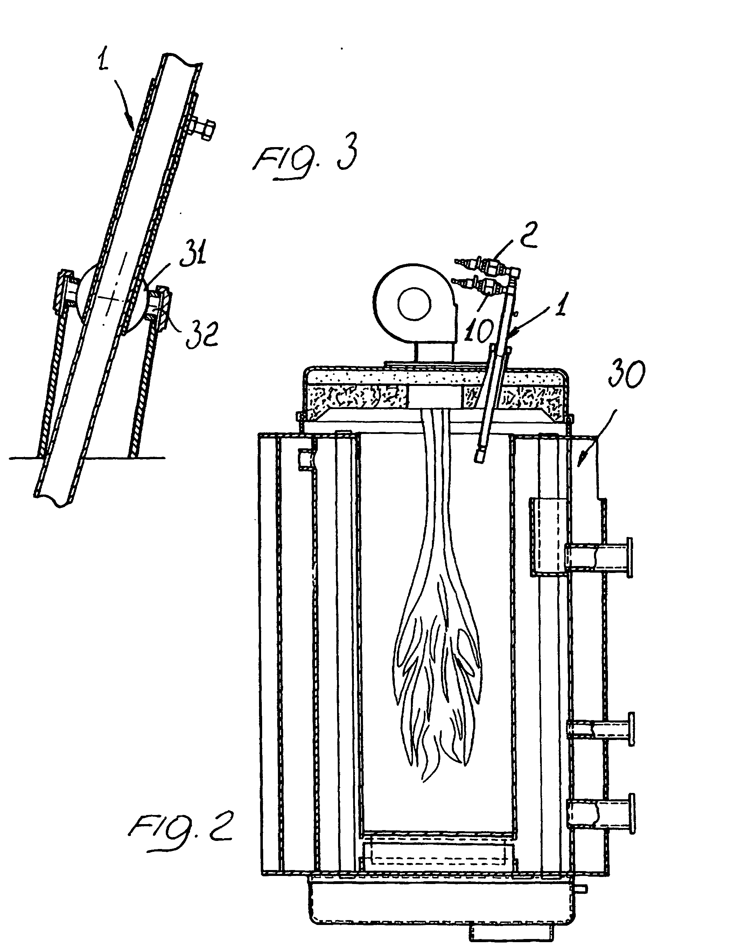

Figure 3 is a schematic cross-sectional view illustrating a detail of orienting means for properly orienting the lance injector;
Figure 4 is a further schematic cross-sectional view illustrating a lance injector;

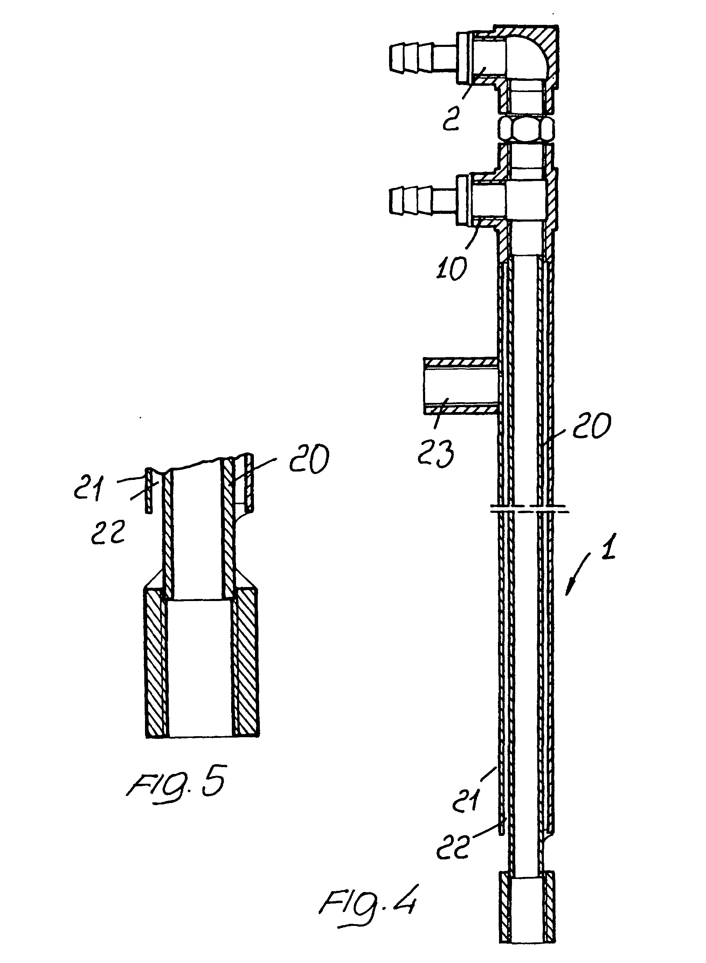

Figure 5 illustrates the end portion of the lance injector and clearly shows moreover the cooling gap.

### DESCRIPTION OF THE PREFERRED EMBODIMENTS

With reference to the number references of the above mentioned figures, the method for reducing environmental emissions in liquid-fuel combustion processes substantially comprises a step of injecting an urea aqueous solution, by means of water or air, into a region of the heat generator where the combustion product temperature is from 800°C to 1000°C.

The urea solution injected into said high temperature region is decomposed into ammonia and carbon dioxide according to the reaction:

N₂H₄CO + H₂ = 2NH3 + CO₂

The presence of ammonia in high temperature combustion products will trigger, in a very short time sequence, the following oxygen and hydrogen reactions, to produce water steam and nitrogen:

4NO + O₂ + 4NH₃ = 4N₂ + 6H₂O

6NO₂ + 8NH₃ = 7N₂ + 12H₂O

NO + NO₂ + 2NH₃ = 2N₂ + 3H₂O

The above indicated reactions are all greatly exothermic and, with respect to the material consume, 1 kg of 100% pure urea corresponds to 0.567 kg of 100% pure ammonia.

The optimum temperature range is that from 800°C to 1000°C, since, at a lower temperature, the conversion process cannot be completed, and this would not provide a sufficient reducing yield.

At higher temperatures, on the other hand, ammonia combines, at a 5-10% rate, with oxygen, according to the following reaction

4NH₃ + 5O₂ = 4NO + 6H₂O

thereby contributing to forming nitrogen oxides and, moreover, the urea solution would tend to crystalize before vaporizing inside the heat generator.

In addition to the above disclosed chemical reaction, a physical reaction due to the very strong water steaming, as a consequence of its nebulizing and its contact with the high temperature environment, causing a reducing of the fuel molecules, also occurs.

Because of the above mentioned reasons, the combustion efficiency is improved, and the solid and gaseous not burn material amounts are greatly reduced.

The injection of the above mentioned aqueous urea solution can be carried out by using a carrier fluid, which can comprise either air or water, and by atomizing it inside the heat generator.

The above mentioned injection is performed by an injector having a specifically designed shape and/or length, which must be selected depending on the used burner.

According to a preferred embodiment, the aqueous urea solution is prepared by using softened water and urea, instead of pure urea, in order to overcome any storing problems as well as injecting problems.

Actually, pure urea crystalizes at temperatures lower than 0°C and greater than 80°C, thereby the holding tanks must be properly heated.

Upon using pure urea, moreover, the injector as the latter portion of the delivery circuit, would be very soon blocked.

The aqueous urea solution, in which urea is present at a rate of 40% by weight, prevents the product from crystalizing up to temperatures of -5°C, thereby obviating any problems related to a storing in a thermal central unit.

Furthermore, an aqueous urea solution including the above mentioned urea rate, would allow to inject the product into regions of the heat generator in which the average temperatures are of about 1000°C, while holding the product temperature less than 80°C.

The amount of injected liquid must always be less than 20% by weight of the amount of fuel supplied to the combustion chamber and must be optimized depending on the practical application, at the start of the operation.

In order to meter the above mentioned solution, a catalytic injector, generally indicated by the reference number 1, has been provided.

Said catalytic injector is provided, at the tip portion thereof, with a nozzle 2 for supplying the mentioned urea solution, coming from a storing tank 3, in communication with a metering pump 4.

On the delivery duct of the metering pump 4, in particular, is fitted, through a shut-off valve 5, a duct 6 for supplying pressurized water.

The above mentioned injector is moreover provided with a second inlet 10, adjoining the nozzle 2, for supplying pressurized air, which is in turn supplied by an air compressor 11.

The lance 1 is provided with an inner jacket 20, into which said aqueous urea solution is supplied, as well as an outer pipe 21, the jacket 20 and pipe 21 providing a cooling gap 22, which can be communicated with an inlet 23 for supplying cooling air therethrough.

In said gap is moreover possible to arrange an insulating element, or other temperature controlling systems, allowing to hold said injector at a temperature less than 80°C.

In order to facilitate the coupling to the inside of the heat generator, indicated by the reference number 30, on said injector a spheric body 31 is connected to properly orient the injector, by fixing it in a spherical seat 32.

The metering of the above mentioned solution is carried out through said injector 1.

More specifically, the aqueous urea solution, pressurized by the metering pump 4, is atomized by water or air, depending on the application, as it will become more apparent hereinafter.

The metering pump can be provided either with a manual or an automatic adjusting device, affecting or controlling the rotary speed of the pump, or through a lever or a PLC controlled inverter.

The above mentioned second approach would allow the system to automatically fit the liquid fuel flow rate, thereby consequently changing the regimen operating conditions.

As is known, fume-tube boilers conventionally use water as a carrier fluid.

At the start of the burner, the water supply circuit is opened, by operating the solenoid valve 5, and, furthermore, also the urea solution circuit is opened, by operating the metering pump 4.

The adjustment of the metering pump, in particular, must be such as to supply up to 5% by volume of the effective fuel pump flow rate, both in a stationary and in a transitory mode of operation.

In this connection it should be apparent that the precise rate of aqueous urea solution being supplied will depend on the used thermal assembly and results to be obtained.

The water amount to be mixed will depend, in turn, on the heat generator injection temperature, which must be less than 80°C.

As the burner is stopped, in order to prevent heat from deforming the injector or crystalizing inside said injector a water-urea mixture, the metering pump 4 will be at first stopped.

Then, with a timed delay of 30 seconds, the water injection is stopped, to remove from the injector any urea traces.

Then, air is injected for about 10 minutes.

If a water-pipe boiler is used, then the start of the operation will be analogous to the above disclosed operation, with the exception that, since the size of this generator and a combustor thereof is much greater than that of the fume-tube generators, then it will be preferred to use, as a carrier fluid, air instead of water.

The rates of aqueous urea solution and liquid fuel would be held unchanged.

In this connection it should be pointed out that the injector must operate in an air or water cooled condition.

Moreover, the injector, in order to provide the required efficiency, must be adjusted relating to its penetration depth and orientation, with respect to the heat generator inside region, where the flame occurs, by using the above mentioned ball articulation assembly.

From the above disclosure it should be apparent that the invention fully achieves the intended objects.

In particular, the fact is to be pointed out that a method has been herein disclosed allowing to greatly reduce all the polluting substances, thereby properly controlling the polluting levels of the combustion process, even if the used fuel is a conventionally polluting one.

The invention, as disclosed, is susceptible to several modifications and variations, all of which will come within the scope of the inventive idea.

Moreover, all of the constructional details can be replaced by other technically equivalent elements.

In practicing the invention, the used materials, as well as the contingent size and shapes, can be any, depending on requirements.

## Claims

1. A method for reducing environmental emissions in liquid-fuel combustion processes carried out in a heat generator, including at least a burner, said method comprises a step of injecting an aqueous urea solution by a carrier fluid into a region of said heat generator, **characterized in that** said method further comprises the steps of pressurizing said aqueous urea solution by a metering pump (4) atomizing said pressurized aqueous urea solution by water or air, adjusting said metering pump to supply up to 5% by volume of the operating flow rate of said metering pump (4) both in a stationary and in a transitory mode of operation and controlling the injection temperature at a value less than 80°C, and that as said at least a burner is stopped, said method further comprises the steps of stopping said metering pump (4), stopping, after a timed delay of about 30 seconds, the water injection and then further injecting air for substantially 10 minutes.

2. A method according to claim 1, **characterized in that** in said region of said heat generator the combustion products have a temperature from 800°C to 1000°C.

3. A method according to claim 1, **characterized in that** said aqueous urea solution comprises 40% by weight of urea.

4. A method according to claim 1, **characterized in that** said aqueous urea solution is supplied with a rate less than 20% with respect to the used liquid fuel.

5. A method according to claim 1, **characterized in that**, with fume-pipe boilers, said carrier fluid comprises water.

6. A method according to claim 1, **characterized in that**, with water pipe boilers, said carrier fluid comprises air.

7. An apparatus for carrying out the method according to claims 1 to 6, comprising a heat generator with at least a burner, a lance injector (1) for injecting in said generator an aqueous urea solution, said lance injector including, at one end thereof, a nozzle (2) communicating with a metering pressurizing pump (4) for supplying said aqueous urea solution, **characterized in that** said apparatus further comprises control means for controlling said metering pump (4) to cause said metering pump to supply up to 5% by volume of the operating flow rate thereof both in a stationary and in a transitory mode of operation, and to stop said metering pump as said at least a burner is stopped, timed water injection stop means for stopping for a set time delay water injection to remove from said lance injector (1) any urea traces and time-controlled air injection means responsive to said water injection stop means for injecting air for a set air injection time after said set time delay.

8. An apparatus according to claim 7, **characterized in that** on a delivery side of said metering pump (4) is coupled a pressurized softened water inlet duct (6), said pressurized water inlet duct (6) being controlled by a solenoid valve (5), a pressurized air inlet (10) supplying pressurized air from an air compressor (11) being further coupled to said injector (1).

9. An apparatus according to claims 7 and 8, **characterized in that** said injector (1) comprises an inner jacket (20), encompassed by an outer pipe (21), said inner jacket (20) and outer pipe (21) defining a cooling gap (22) therebetween for thermally insulating said inner jacket (20).

10. An apparatus according to claims 7 to 9, **characterized in that** said apparatus comprises a ball joint (31, 32), to be coupled to said injector (1), for orienting said injector in the combustor chamber of said heat generator (30).

## Patentansprüche

1. Verfahren zur Verminderung von Emissionen an die Umwelt durch Verfahren der Verbrennung von Flüssigbrennstoffen in einer Wärmeerzeugungsvorrichtung, die wenigstens einen Brenner enthält, wobei das Verfahren einen Schritt des Einspritzens einer wässrigen Harnstofflösung durch ein Trägerfluid in eine Region der Wärmeerzeugungsvorrichtung umfasst, **dadurch gekennzeichnet, dass** das Verfahren des Weiteren folgende Schritte umfasst: Druckbeaufschlagen der wässrigen Harnstofflösung durch eine Zumesspumpe (4), welche die druckbeaufschlagte wässrige Harnstofflösung durch Wasser oder Luft zerstäubt; Einstellen der Zumesspumpe auf eine Zufuhr von maximal 5 Vol.-% der Arbeitsströmungsrate der Zumesspumpe (4) sowohl in einem stationären als auch in einem transitorischen Betriebsmodus; und Steuern der Einspritztemperatur auf einen Wert von unter 80 °C, und dass, wenn der wenigstens eine Brenner gestoppt wird, das Verfahren des Weiteren folgende Schritte umfasst: Anhalten der Zumesspumpe (4), Stoppen - nach einer zeitgesteuerten Verzögerung von etwa 30 Sekunden - der Wassereinspritzung und anschließend weiteres Einblasen von Luft für etwa 10 Minuten.

2. Verfahren nach Anspruch 1, **dadurch gekennzeichnet, dass** in der Region der Wärmeerzeugungsvorrichtung die Verbrennungsprodukte eine Temperatur von 800 °C bis 1.000 °C aufweisen.

3. Verfahren nach Anspruch 1, **dadurch gekennzeichnet, dass** die wässrige Harnstofflösung 40 Gewichts-% Harnstoff umfasst.

4. Verfahren nach Anspruch 1, **dadurch gekennzeichnet, dass** die wässrige Harnstofflösung mit einer Rate von weniger als 20 % im Verhältnis zum verbrauchten Flüssigbrennstoff zugeführt wird.

5. Verfahren nach Anspruch 1, **dadurch gekennzeichnet, dass** im Fall von Rauchgasrohrkesseln das Trägerfluid Wasser umfasst.

6. Verfahren nach Anspruch 1, **dadurch gekennzeichnet, dass** im Fall von Wasserrohrkesseln das Trägerfluid Luft umfasst.

7. Vorrichtung zum Ausführen des Verfahrens nach den Ansprüchen 1 bis 6, umfassend: eine Wärmeerzeugungsvorrichtung mit wenigstens einem Brenner, eine Lanzeneinspritzvorrichtung (1) zum Einspritzen einer wässrigen Harnstofflösung in die Erzeugungsvorrichtung, wobei die Lanzeneinspritzvorrichtung an einem Ende eine Düse (2) enthält, die mit einer Zumess-Druckbeaufschlagungspumpe (4) zum Zuführen der wässrigen Harnstofflösung in strömungsmäßiger Verbindung steht, **dadurch gekennzeichnet, dass** die Vorrichtung des Weiteren Folgendes umfasst: ein Steuerungsmittel zum Steuern der Zumesspumpe (4), welches die Zumesspumpe veranlasst, maximal 5 Vol.-% ihrer Arbeitsströmungsrate sowohl in einem stationären als auch in einem transitorischen Betriebsmodus zuzuführen, und welches die Zumesspumpe veranlasst anzuhalten, wenn der wenigstens eine Brenner gestoppt wird; ein zeitgesteuertes Wassereinspritzstoppmittel zum Stoppen - für die Dauer einer festgelegten Zeitverzögerung - der Wassereinspritzung, um von der Lanzeneinspritzvorrichtung (1) jegliche Harnstoffspuren zu entfernen; und ein zeitgesteuertes Lufteinblasmittel, das auf das Wassereinspritzstoppmittel reagiert, zum Einblasen von Luft für eine festgelegte Lufteinblasdauer im Anschluss an die festgelegte Zeitverzögerung.

8. Vorrichtung nach Anspruch 7, **dadurch gekennzeichnet, dass** auf einer Zufuhrseite der Zumesspumpe (4) ein Einlasskanal (6) für druckbeaufschlagtes enthärtetes Wasser angekoppelt ist, wobei dieser Druckwassereinlasskanal (6) durch ein Magnetventil (5) gesteuert wird, wobei ein Drucklufteinlass (10) Druckluft von einem Luftverdichter (11) zuleitet, der des Weiteren mit der Einspritzvorrichtung (1) verbunden ist.

9. Vorrichtung nach den Ansprüchen 7 und 8, **dadurch gekennzeichnet, dass** die Einspritzvorrichtung (1) einen Innenmantel (20) umfasst, der von einem Außenrohr (21) umgeben ist, wobei der Innenmantel (20) und das Außenrohr (21) zwischen sich einen Kühlspalt (22) definieren, um den Innenmantel (20) thermisch zu isolieren.

10. Vorrichtung nach den Ansprüchen 7 bis 9, **dadurch gekennzeichnet, dass** die Vorrichtung ein Kugelgelenk (31, 32) umfasst, das mit der Einspritzvorrichtung (1) verbunden ist, um die Einspritzvorrichtung in der Brennkammer der Wärmeerzeugungsvorrichtung (30) auszurichten.

## Revendications

1. Un procédé pour la réduction des émissions nuisibles à l'environnement au cours des opérations de combustion de fuel liquide mises en oeuvre dans un générateur de chaleur, comprenant au moins un brûleur, ledit procédé comprenant une étape d'injection d'une solution aqueuse d'urée au moyen d'un fluide transporteur dans une zone dudit générateur de chaleur, **caractérisé en ce que** ledit procédé comprend en outre les étapes de mise sous pression de ladite solution aqueuse d'urée au moyen d'une pompe doseuse (4) pulvérisant au moyen d'eau ou d'air ladite solution aqueuse d'urée sous pression, de réglage de ladite pompe doseuse pour qu'elle fournisse jusqu'à 5% en volume du débit de fonctionnement de ladite pompe doseuse (4) à la fois en mode stationnaire et en mode transitoire de fonctionnement et de maintien de la température d'injection à une valeur inférieure à 80°C, et **en ce que**, lorsque ledit au moins un brûleur est arrêté, ledit procédé comprend en outre les étapes d'arrêt de ladite pompe doseuse (4), d'arrêt, après une durée mesurée dans le temps, d'environ 30 secondes, de l'injection d'eau et ensuite de poursuite de l'injection d'air pendant sensiblement 10 minutes.

2. Un procédé selon la revendication 1, **caractérisé en ce que**, dans ladite zone dudit générateur de chaleur, les produits de combustion ont une température allant de 800°C à 1000°C.

3. Un procédé selon la revendication 1, **caractérisé en ce que** ladite solution aqueuse d'urée comprend 40% en poids d'urée.

4. Un procédé selon la revendication 1, **caractérisé en ce que** ladite solution aqueuse d'urée est fournie avec un débit inférieur à 20% par rapport au fuel liquide utilisé.

5. Un procédé selon la revendication 1, **caractérisé en ce que**, avec des chaudières à tuyau d'échappement, ledit fluide transporteur comprend de l'eau.

6. Un procédé selon la revendication 1, **caractérisé en ce que**, avec des chaudières à tuyau d'eau, ledit fluide transporteur comprend de l'air.

7. Un appareil pour la mise en oeuvre du procédé selon les revendications 1 à 6, comprenant un générateur de chaleur ayant au moins un brûleur, un injecteur à lance (1) pour injecter dans ledit générateur un solution aqueuse d'urée, ledit injecteur à lance comprenant, à l'une de ses extrémités, une buse (2) communiquant avec une pompe doseuse de mise sous pression (4) pour fournir ladite solution aqueuse d'urée, **caractérisé en ce que** ledit appareil comprend en outre des moyens de commande pour commander ladite pompe doseuse (4) pour amener ladite pompe doseuse (4) à fournir jusqu'à 5% en volume de son débit de fonctionnement à la fois en mode stationnaire et en mode transitoire de fonctionnement, et pour arrêter ladite pompe doseuse lorsque ledit au moins un brûleur est arrêté, des moyens d'arrêt d'injection d'eau mesurée dans le temps pour arrêter pendant une durée définie l'injection de l'eau pour éliminer dudit injecteur à lance (1) toute trace d'urée et des moyens d'injection d'air commandés dans le temps et répondant auxdits moyens d'arrêt d'injection d'eau pour injecter de l'air pendant une durée d'injection d'air définie après ladite durée définie.

8. Un appareil selon la revendication 7, **caractérisé en ce que** sur un côté d'alimentation de ladite pompe doseuse (4) est couplé un conduit d'entrée d'eau adoucie sous pression (6), ledit conduit d'entrée d'eau sous pression (6) étant commandé par une électrovanne (5), une entrée d'air sous pression (10) fournissant de l'air sous pression provenant d'un compresseur d'air (11) couplé en outre audit injecteur (1).

9. Un appareil selon les revendications 7 et 8, **caractérisé en ce que** ledit injecteur (1) comprend une gaine intérieure (20), entourée par un tuyau extérieur (21), lesdits gaine intérieure (20) et tuyau extérieur (21) formant un espace de refroidissement (22) entre eux pour isoler thermiquement ladite gaine intérieure (20).

10. Un appareil selon les revendications 7 à 9, **caractérisé en ce que** ledit appareil comprend une articulation sphérique (31, 32), destinée à être couplé audit injecteur (1), pour orienter ledit injecteur dans la chambre de combustion dudit générateur de chaleur (30).
